# EUROPÄISCHE PATENTANMELDUNG

(11) **EP 4 618 034 A1**
(43) Veröffentlichungstag der Anmeldung: **17.09.2025**
(21) Anmeldenummer: 25160020.1
(22) Anmeldetag: 25.02.2025
(51) Int. Cl.: G06V 10/74, G06V 10/774, G06V 20/52

(54) **VERFAHREN ZUM ERZEUGEN EINES TRAININGSDATENSATZES**

(30) Priorität: 11.03.2024 DE 102024202234
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Giliard, Anke, 70180 Stuttgart (DE); Frischen, Andreas, 71229 Leonberg (DE); Fiederer, Lukas, 72336 Balingen (DE); Moster, Benjamin, 75223 Niefern-Oeschelbronn (DE)

(57) **Zusammenfassung**

Die Erfindung betrifft ein Computerimplementiertes Verfahren (300) zum Erzeugen eines Trainingsdatensatzes (143) für ein Training einer künstlichen Intelligenz (125) zum Betreiben eines Messgeräts (100), insbesondere eines Wanddiagnosegeräts, umfassend:
Empfangen (301) von unklassifizierten Sensordaten (172) wenigstens einer Sensoreinheit (101) eines Messgeräts (100) durch ein Klassifikatormodul (183);
Klassifizieren (303) der unklassifizierten Sensordaten (172) und Bereitstellen von klassifizierten Sensordaten (174) durch Ausführen eines Klassifikatormoduls (183) auf die unklassifizierten Sensordaten (172); und
Hinzufügen (305) der klassifizierten Sensordaten (174) zu einem Trainingsdatensatz (143).

## Beschreibung

Die vorliegende Erfindung betrifft ein Verfahren zum Erzeugen eines Trainingsdatensatzes für ein Training einer künstlichen Intelligenz für ein Wanddiagnosegerät.

### Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Erzeugen eines Trainingsdatensatzes für ein Training einer künstlichen Intelligenz eines Wanddiagnosegeräts bereitzustellen.

Die Aufgabe wird durch das Verfahren des Anspruchs 1 gelöst. Vorteilhafte Ausführungsformen sind Gegenstand der abhängigen Ansprüche.

Nach einem Aspekt wird ein Computerimplementiertes Verfahren zum Erzeugen eines Trainingsdatensatzes für ein Training einer künstlichen Intelligenz zum Betreiben eines Messgeräts bereitgestellt, insbesondere eines Wanddiagnosegeräts, umfassend:
Empfangen von unklassifizierten Sensordaten wenigstens einer Sensoreinheit eines Messgeräts durch ein Klassifikatormodul, wobei die Sensordaten eine zu diagnostizierende Wand mit einem in der Wand in einer Objektposition angeordneten Objekt eines Objekttyps abbilden;
Klassifizieren der unklassifizierten Sensordaten und Bereitstellen von klassifizierten Sensordaten durch Ausführen eines Klassifikatormoduls auf die unklassifizierten Sensordaten, wobei das Klassifikatormodul als eine künstliche Intelligenz ausgebildet und eingerichtet ist, basierend auf unklassifizierten Sensordaten eine Objekterkennung auszuführen und die Objektposition und/oder den Objekttyp des Objekts zu bestimmen und die unklassifizierten Sensordaten in Bezug auf die Objektposition und/oder den Objekttyp zu klassifizieren; und Hinzufügen der klassifizierten Sensordaten zu einem Trainingsdatensatz.

Hierdurch kann der technische Vorteil erreicht werden, dass ein verbessertes Verfahren zum Erzeugen eines Trainingsdatensatzes für ein Training einer künstlichen Intelligenz zum Betreiben eines Messgeräts, insbesondere eines Wanddiagnosegeräts, bereitgestellt werden kann. Hierzu werden durch ein Klassifikatormodul basierend auf unklassifizierten Sensordaten klassifizierte Sensordaten generiert und diese zu einem Trainingsdatensatz hinzugefügt. Die Sensordaten, unklassifiziert wie klassifiziert, bilden hierbei eine durch das Messgerät zu untersuchende Wand ab inklusive wenigstens eines in der Wand in einer Objektposition angeordneten Objekts eines Objekttyps.

Die Klassifizierung der unklassifizierten Sensordaten durch das Klassifikatormodul erfolgt hierbei in Bezug auf die Objektposition und/oder den Objekttyp der in der Wand angeordneten Objekte. Indem das Klassifikatormodul als eine künstliche Intelligenz ausgebildet ist und eingerichtet ist, basierend auf unklassifizierten Sensordaten eine Objekterkennung von den in der durch die Sensordaten abgebildeten Wand angeordneten Objekten inklusive der Ermittlung einer Objektposition und/oder eines Objekttyps auszuführen, und auf der Objekterkennung basierend eine Klassifikation der unklassifizierten Sensordaten in Bezug auf die Objektposition und/oder den Objekttyp auszuführen, kann eine automatische Klassifizierung von unklassifizierten Sensordaten erreicht werden. Klassifizierte Sensordaten sind im Sinne der Anmeldung gelabelte Sensordaten, wie diese aus dem Bereich des maschinellen Lernens bekannt ist.

Nach einer Ausführungsform umfassen die unklassifizierten Sensordaten zweidimensionale unklassifizierte Radardaten, wobei das Klassifikatormodul basierend auf den unklassifizierten Radardaten und unter Berücksichtigung einer Klassifikationszusatzinformation trainiert wurde, in Bezug auf die Objektposition und/oder den Objekttyp klassifizierte Radardaten zu generieren, wobei die klassifizierten Sensordaten die klassifizierten Radardaten umfassen und eine Wand mit einem in der Wand ausgebildeten Objekt in Bezug auf zwei Raumdimensionen abbilden, und wobei die Klassifikationszusatzinformation eine Information bezüglich der Objektposition und/oder des Objekttyps in Bezug auf eine dritte Raumdimension umfasst.

Hierdurch kann der technische Vorteil erreicht werden, dass eine verbesserte Objekterkennung durch das Klassifikatormodul und damit verbunden eine verbesserte Klassifizierung der unklassifizierten Sensordaten durch das Klassifikatormodul erreicht werden kann. Durch das Training des Klassifikatormoduls auf klassifizierten Sensordaten kann eine zuverlässige Objekterkennung durch das Klassifikatormodul erreicht werden. Durch die Berücksichtigung einer Klassifikationszusatzinformation kann die Objekterkennung durch das Klassifiaktormodul und die darauf basierende Klassifizierung der unklassifizierten Sensordaten weiter verbessert werden.

Nach einer Ausführungsform wurde die Klassifikationszusatzinformation durch Ausführen einer weiteren künstlichen Intelligenz auf die klassifizierten zweidimensionalen Radardaten generiert wurde, und wobei die weitere künstliche Intelligenz trainiert ist, basierend auf den klassifizierten zweidimensionalen Radardaten die Objektposition und/oder den Objekttyp in Bezug auf die drei Raumdimensionen zu bestimmen.

Hierdurch kann der technische Vorteil erreicht werden, dass durch die Verwendung der weiteren künstlichen Intelligenz zur Erzeugung der Klassifikationszusatzinformation eine aussagekräftige Klassifikationszusatzinformation bereitgestellt werden kann, mittels der das Training des Klassifikatormoduls durchführbar ist.

Nach einer Ausführungsform sind die zwei Raumdimensionen der klassifizierten und/oder unklassifizierten zweidimensionalen Radardaten durch senkrecht zueinander und parallel zu einer Oberfläche der durch die Radardaten abgebildeten Wand orientierte erste und zweite Richtungen definiert, wobei die dritte Raumdimension durch eine senkrecht zu den ersten und zweiten Richtungen und in die Wand gerichtete dritte Richtung gegeben ist, wobei die klassifizierten und/oder unklassifizierten Radardaten Daten einer Mehrzahl von entlang der zweiten Richtung nebeneinander verlaufender und entlang der ersten Richtung verlaufender Scanvorgänge des Messgeräts beschreiben, wobei in den Scanvorgängen das Messgerät entlang der ersten Richtung relativ zur Wand bewegt wird und Radardaten aufgenommen werden, und wobei die Radardaten eine Information bezüglich einer Signalstärke entlang der in die Wand gerichteten dritten Richtung umfassen.

Hierdurch kann der technische Vorteil erreicht werden, dass durch die Radardaten die zu untersuchende Wand in drei Raumdimensionen abgebildet ist. Die Scanvorgänge des Messgeräts sind hierbei im Sinne der Anmeldung eine Messung des Messgeräts während eines Bewegens des Messgeräts entlang der ersten Richtung relativ zu Wand. Beim Bewegen des Messgeräts relativ zur Wand werden Radardaten der Wand aufgenommen. Die Radardaten umfassen hierbei eine Signalinformation in einer in die Wand gerichtete dritten Richtung. Durch eine Anordnung einer Mehrzahl von Scanvorgängen entlang der zweiten Raumrichtung kann somit eine dreidimensionale Information der zu untersuchenden Wand erreicht werden.

Nach einer Ausführungsform umfasst das Klassifizieren:
Bestimmen der Objektposition entlang der ersten Richtung basierend auf der Information bezüglich der Signalstärke entlang der dritten Richtung, wobei die Objektposition als eine Position entlang der ersten Richtung mit maximaler Signalstärke entlang der dritten Richtung definiert ist.

Hierdurch kann der technische Vorteil erreicht werden, dass eine präzise Ermittlung der Objektposition entlang der ersten Richtung ermöglicht ist. Indem die Objektposition entlang der ersten Richtung als die Position mit maximaler Signalstärke entlang der dritten Richtung interpretiert wird, kann eine präzise Objektdetektion basierend auf den Radardaten erreicht werden.

Nach einer Ausführungsform umfasst die Klassifikationszusatzinformation die Information bezüglich der Signalstärke entlang der dritten Richtung.

Hierdurch kann der technische Vorteil erreicht werden, dass eine aussagefähige Klassifikationszusatzinformation bereitgestellt werden kann.

Nach einer Ausführungsform sind die klassifizierten und/oder unklassifizierten Radardaten als zweidimensionale Flächenplots dargestellt, in denen die Daten der Mehrzahl von Scanvorgängen zusammengefasst sind, und wobei die Bestimmung der Objektposition für die Mehrzahl von Scanvorgängen gemeinsam ausgeführt wird.

Hierdurch kann der technische Vorteil erreicht werden, dass eine einfache Verarbeitung der Radardaten durch das Klassifikatormodul ermöglicht ist.

Nach einer Ausführungsform ist das Klassifikatormodul als neuronales Netz ausgebildet.

Hierdurch kann der technische Vorteil erreicht werden, dass ein Leistungsfähiges und verlässliches Klassifikatormodul bereitgestellt werden kann.

Nach einer Ausführungsform erfolgt die Klassifikation der Sensordaten ferner in Bezug auf eine Objekttiefe und/oder eine Objektausdehnung des Objekts erfolgt.

Hierdurch kann der technische Vorteil erreicht werden, dass zusätzliche Informationen bezüglich weiterer Merkmale der in den zu untersuchenden

Wänden angeordneten Objekten im Trainingsdatensatz, im Training des Diagnosemoduls und damit in der Wanddiagnose des Diagnosemoduls berücksichtigt werden können.

Nach einer Ausführungsform umfassen Objektklassen des Objekttyps des Objekts: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps der Wand: Betonwand, Leichtbau-/Trockenbauwand, gemauerte Wand und/oder von vermauerten Steinen der Wand, Fußbodenheizung, Wandheizung umfassen.

Hierdurch kann der technische Vorteil erreicht werden, dass eine große Anzahl verschiedener Objekte unterschiedlicher Objekttypen erkannt bzw. klassifiziert werden kann. Das Messgerät bzw. das Diagnosemodul kann hierbei darauf trainiert sein, übliche in Gebäudewänden verbaute Objekte zu detektieren und zu klassifizieren. Dies ermöglicht eine besonders präzise Wanddiagnose, in der die detektierten Objekte präzise und eindeutig den entsprechenden Objektklassen zugeordnet werden können.

Durch die präzise Objektklassifizierung und das Bereitstellen der entsprechenden Klassifizierungsinformation dem Nutzer / der Nutzerin über die Anzeigeeinheit ist eine möglichst aussagekräftige Wanddiagnose ermöglicht. In dem der Nutzer / die Nutzerin nicht nur weiß, dass und wo sich ein Objekt innerhalb der Wand befindet, sondern auch um welchen Objekttyp es sich bei dem detektierten Objekt handelt, kann der Nutzer / die Nutzerin entsprechend entscheiden, wie die weitere Bearbeitung der Wand in Bezug auf das detektierte Objekt auszuführen ist. Das Bereitstellen der Objekttypen der Objektklassifikation der detektierten Objekte stellt somit einen essentiellen Bereich der Wanddiagnose dar, da der Nutzer / die Nutzerin basierend auf dem angegebenen Objekttyp die geplante Bearbeitung der Wand entsprechend anpassen kann.

Nach einem Aspekt wird ein Trainingsdatensatz für ein Training einer künstlichen Intelligenz eines Messgeräts zur Wanddiagnostik bereitgestellt, wobei der Trainingsdatensatz durch das Verfahren zum Erzeugen eines Trainingsdatensatzes zum Trainieren einer künstlichen Intelligenz zum Betreiben eines Messgeräts nach einer der voranstehenden Ausführungsformen erzeugt wurde.

Nach einem Aspekt wird eine Recheneinheit bereitgestellt, die eingerichtet ist, das Verfahren zum Erzeugen eines Trainingsdatensatzes zum Trainieren einer künstlichen Intelligenz zum Betreiben eines Messgeräts nach einer der voranstehenden Ausführungsformen und/oder das Verfahren zum Trainieren einer künstlichen Intelligenz eines Messgeräts auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Erzeugen eines Trainingsdatensatzes zum Trainieren einer künstlichen Intelligenz zum Betreiben eines Messgeräts nach einer der voranstehenden Ausführungsformen und/oder das Verfahren zum Trainieren einer künstlichen Intelligenz eines Messgeräts auszuführen.

Ausführungsformen der Erfindung sind mit Bezug auf die folgenden Fig.en beschrieben. Die Fig.en zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform,
- Fig. 5: eine weitere schematische Darstellung des Messgeräts gemäß einer weiteren Ausführungsform;
- Fig. 6: eine schematische Darstellung eines Systems zum Erzeugen eines Trainingsdatensatzes gemäß einer Ausführungsform,
- Fig. 7: ein Flussdiagramm eines Verfahrens zum Erzeugen eines Trainingsdatensatzes gemäß einer Ausführungsform,
- Fig. 8: eine grafische Darstellung eines zweidimensionalen Flächenplots von Radardaten,
- Fig. 9: eine grafische Darstellung eines zweidimensionalen Flächenplots von Radardaten, und
- Fig. 10: eine schematische Darstellung eines Computerprogrammprodukts.

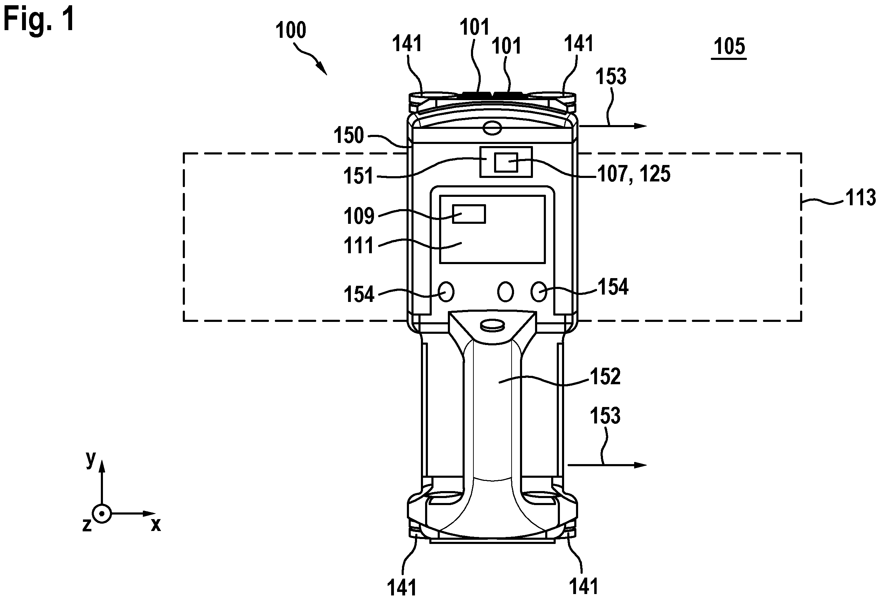

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer / einer Nutzerin zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer / eine Nutzerin, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer / einer Nutzerin des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer / eine Nutzerin des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden.

Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

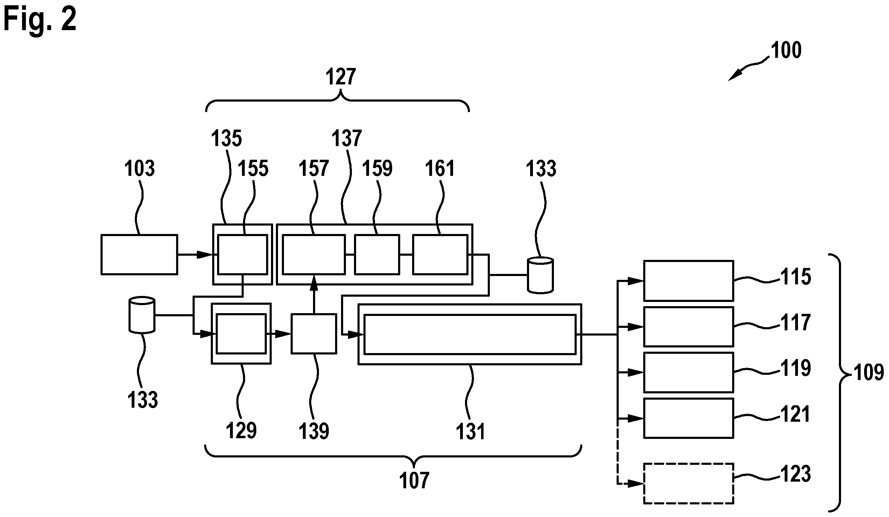

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

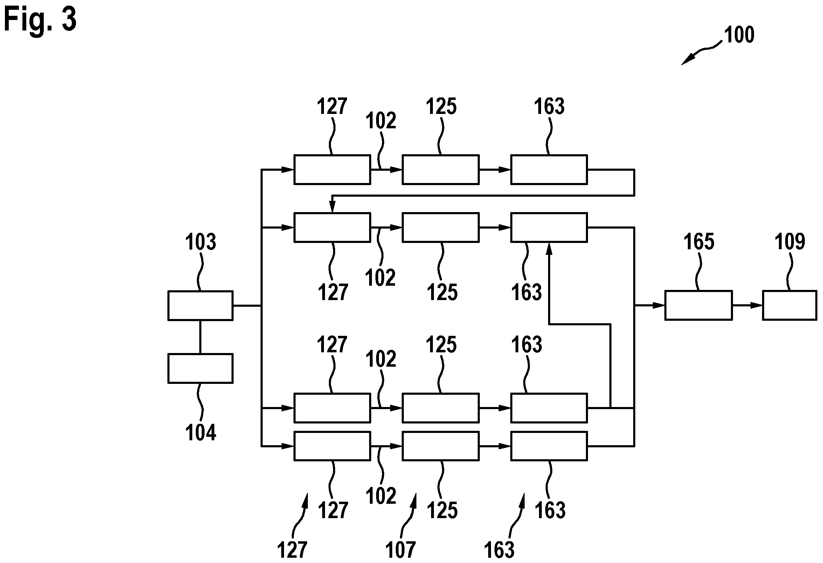

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

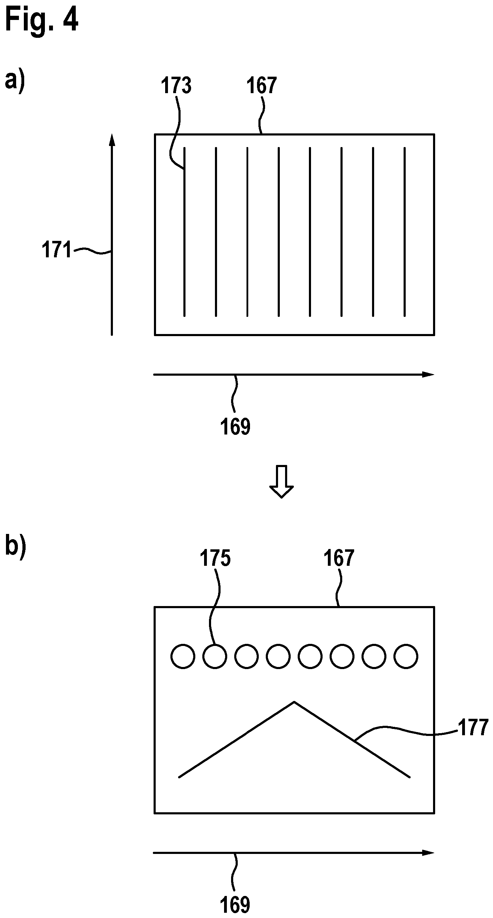

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Fig. 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Fig. 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

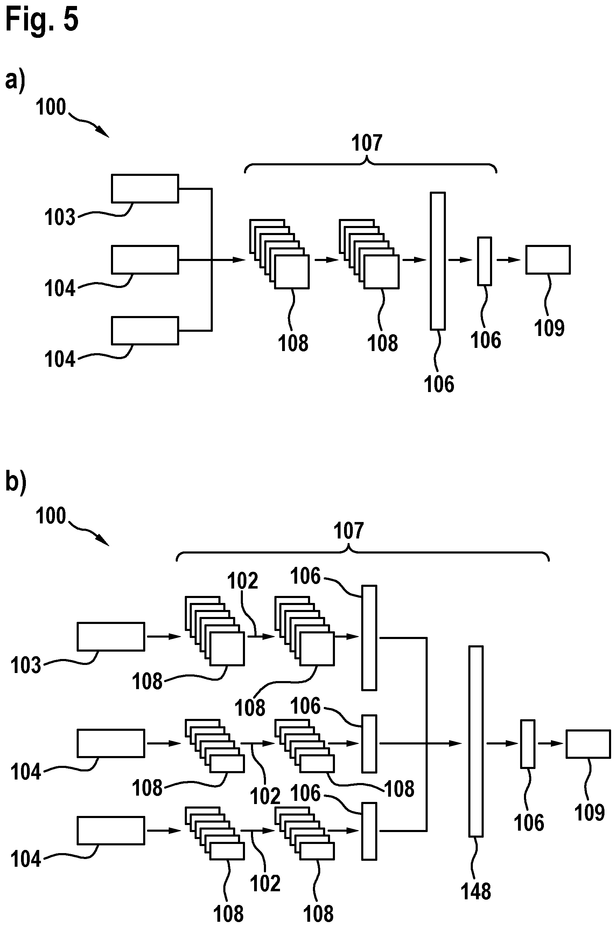

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

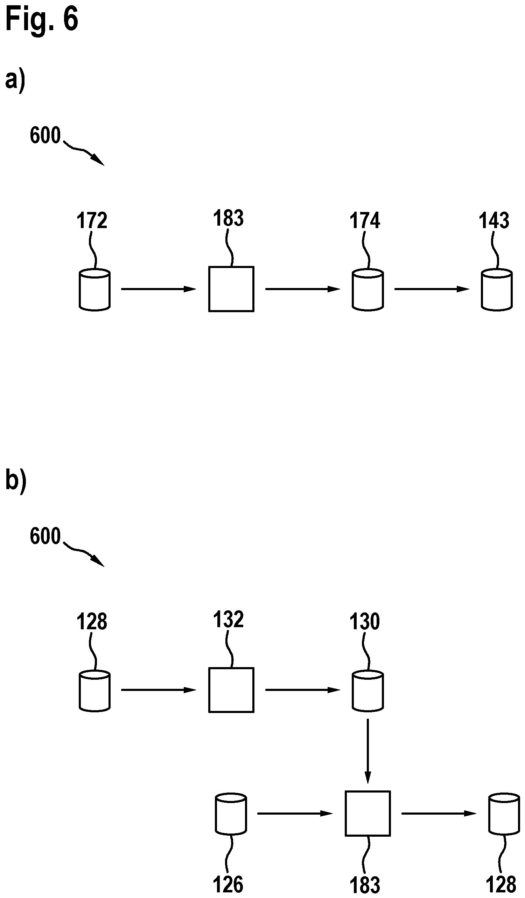

Fig. 6 zeigt eine schematische Darstellung eines Systems 600 zum Erzeugen eines Trainingsdatensatzes 143 gemäß einer Ausführungsform.

In der gezeigten Ausführungsform umfasst das System zum Erzeugen eines Trainingsdatensatzes 143 wenigstens ein Klassifikatormodul 183. Das Klassifikatormodul 183 ist als eine trainierte künstliche Intelligenz ausgebildet und eingerichtet, basierend auf unklassifizierten Sensordaten 172 klassifizierte Sensordaten 174 für den Trainingsdatensatz 143 zu erzeugen. Das Klassifikatormodul 183 ist hierbei darauf trainiert, basierend auf den unklassifizierten Sensordaten 172 eine Objekterkennung von in der durch die Sensordaten 172 abgebildeten Wand 105 angeordneten Objekten 113 durchzuführen. Die Objekterkennung umfasst hierbei eine Objektdetektion mit Bestimmung der Objektposition 115 und/oder eine Objektklassifikation mit Bestimmung des Objekttyps 117 des jeweiligen Objekts 113.

In der Ausführungsform in Grafik b) umfasst das System 600 neben dem Klassifikatormodul 183 ferner eine weitere künstliche Intelligenz 132. Die weitere künstliche Intelligenz 132 ist hierbei darauf trainiert, auf klassifizierten Radardaten 128 eine Klassifikationszusatzinformation 130 zu bestimmen. Die klassifizierten Radardaten 128 bilden hierbei zu untersuchende Wände 105 und darin angeordnete Objekte 113 ab. Die klassifizierten Radardaten 128 sind hierbei wenigstens in Bezug auf die Objektposition 115 und/oder den Objekttyp 117 der in den abgebildeten Wänden 105 angeordneten Objekten 113 klassifiziert. Die klassifizierten Radardaten 128 sind hierbei in zweidimensionaler Form und umfassen eine Mehrzahl von entlang der ersten Raumrichtung verlaufenden Scanvorgängen des Messgeräts 100, wobei die Mehrzahl von Scanvorgängen entlang einer zweiten Richtung nebeneinander angeordnet sind. Die ersten und zweiten Richtungen verlaufen hierbei entlang der X bzw. Y-Achse des Koordinatensystems der Fig. 1 und sind damit parallel zur Oberfläche der zu untersuchenden Wand 105 angeordnet.

Die weitere künstliche Intelligenz 132 ist trotz der Anwendung auf die zweidimensionalen Radardaten 128 darauf trainiert, die Objektposition 115 der in der Wand 105 angeordneten Objekte 113 in drei Raumrichtungen X, Y, Z zu ermitteln. Die durch die weitere künstliche Intelligenz 132 generierte Klassifikationszusatzinformation 130 beschreibt hierbei die Objektposition 115 und/oder den Objekttyp 117 in Bezug auf die dritte Raumrichtung. Die dritte Raumrichtung ist hierbei entlang der Z-Achse des in Fig. 1 gezeigten Koordinatensystems ausgerichtet und verläuft somit in die abgebildete Wand 105 hinein.

Die weitere künstliche Intelligenz 132 ist darauf trainiert, basierend auf den klassifizierten Radardaten 128 die Objekterkennung der in den durch die Radardaten 128 abgebildeten Wänden 105 angeordneten Objekte 113 in allen drei Raumrichtungen zu bestimmen. Die weitere künstliche Intelligenz 132 ist damit wenigstens eingerichtet, basierend auf den zweidimensionalen klassifizierten Radardaten 128 die Objektposition 115 der Objekte 113 in Bezug auf die drei Raumrichtungen X, Y, Z des in Fig. 1 dargestellten Koordinatensystems zu bestimmen.

Das Klassifikatormodul 183 wird nun basierend auf unklassifizierten Radardaten 126 unter Berücksichtigung des durch die weitere künstliche Intelligenz 132 bereitgestellten Klassifikationszusatzinformationen 130 trainiert. Die unklassifizierten Radardaten 126 sind wiederum in zweidimensionaler Form und umfassen eine Mehrzahl von Radardaten, die in einer Mehrzahl von Scanvorgängen 140 aufgenommen wurden. Die Scanvorgänge 140 beschreiben Messungen des Messgeräts 100, bei dem das Messgerät 100 entlang der ersten Raumrichtung X relativ zur untersuchenden Wand 105 bewegt wird und während dem Radardaten 103 aufgenommen werden. Die Messungen der Scanvorgänge werden für verschiedene entlang der zweiten Raumrichtung Y angeordnete Stellen der Wand 105 ausgeführt. Hierdurch kann ein zweidimensionaler Raumbereich der Wand 105 untersucht und durch die entsprechend aufgenommenen Radardarten abgebildet werden. Hierzu werden die in der Mehrzahl verschiedener Scanvorgänge 140 aufgenommenen Daten entlang der zweiten Raumrichtung Y nebeneinander angeordnet und zu den zweidimensionalen Radardaten zusammengefasst.

Basierend auf den zweidimensionalen unklassifizierten Radardaten 126 und unter Berücksichtigung der Klassifikationszusatzinformation 130 wird das Klassifikatormodul Z nach aus dem Stand der Technik bekannten Trainingsverfahren darauf trainiert, klassifizierte Radardaten 128 zu erzeugen. Die klassifizierten Radardaten 128 durch das entsprechend trainierte Klassifikatormodul 183 sind hierbei wenigstens in Bezug auf die Objektposition 115 und/oder den Objekttyp 117 der Objekte 113 klassifiziert.

Die in der Grafik d) für das Training der weiteren künstlichen Intelligenz 132 verwendeten klassifizierten Radardaten 128 und die während des Trainings des Klassifikatormoduls 183 generierten klassifizierten Radardaten 128 müssen nicht die gleichen Radardaten sein, sondern können unterschiedliche Daten repräsentieren.

Die unklassifizierten Radardaten 126, die für das Training des Klassifikatormoduls 183 verwendet werden, können durch eine Mehrzahl von verschiedenen Messungen einer Mehrzahl verschiedener Messgeräte 100 generiert worden sein.

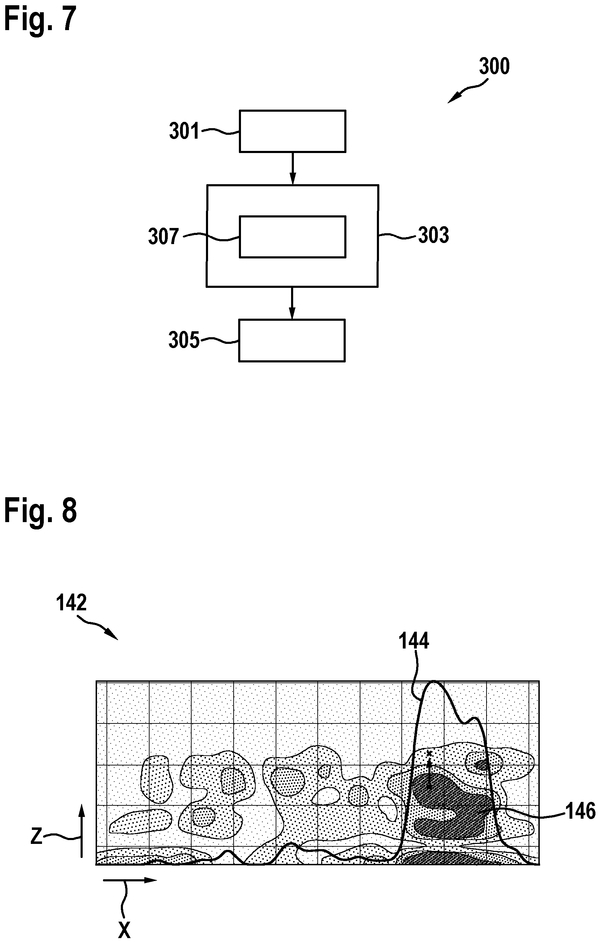

Fig. 7 zeigt ein Flussdiagramm eines Verfahrens 300 zum Erzeugen eines Trainingsdatensatzes 143 gemäß einer Ausführungsform.

Zum Erzeugen eines Trainingsdatensatzes 143 werden in einem ersten Verfahrensschritt 301 zunächst unklassifizierte Sensordaten 172 wenigstens einer Sensoreinheit eines Messgeräts 100 durch ein Klassifikatormodul 183 empfangen. Die Sensordaten 172 bilden die zu diagnostizierende Wand 105 und die darin angeordneten Objekte 113 ab. Die Sensordaten 172 können Radardaten 103 und zusätzliche Sensorinformationen 104 umfassen.

In einem weiteren Verfahrensschritt 303 werden die unklassifizierten Sensordaten 172 durch das Klassifikatormodul 183 klassifiziert und es werden klassifizierte Sensordaten 174 generiert. Das Klassifikatormodul 183 ist hierbei als entsprechend trainierte künstliche Intelligenz ausgebildet und eingerichtet basierend auf unklassifizierten Sensordaten 172 einer Objekterkennung auszuführen und die Objektposition 115 und/oder den Objekttyp 117 der Objekte 113 zu bestimmen. Das Klassifikatormodul 183 ist basierend auf der Objekterkennung eingerichtet eine entsprechende Klassifikation der unklassifizierten Sensordaten 172 in Bezug auf die Objektposition 115 und/oder den Objekttyp 117 der Objekte 113 durchzuführen.

Gemäß einer Ausführungsform sind die unklassifizierten Sensordaten 172 zweidimensionale unklassifizierte Radardaten 126. Das Klassifikatormodul 183 ist hierbei auf den unklassifizierten Radardaten trainiert, in Bezug auf die Objektposition 115 und/oder den Objekttyp 117 klassifizierte Radardaten 128 zu generieren. Die unklassifizierten Radardaten 126 und die klassifizierten Radardaten 128 umfassen hierbei zweidimensionale Radardaten, und bilden die zu untersuchende Wand 105 in Bezug auf eine erste Raumrichtung X und eine senkrecht dazu angeordnete zweite Raumrichtung Y ab. Die ersten und zweiten Raumrichtungen X, Y sind hierbei parallel zu einer Oberfläche der Wand 105. Die Klassifikationszusatzinformation 130 umfasst eine Information bezüglich der Objektposition 115 und/oder der Objekttyps 117 in Bezug auf eine zu den ersten und zweiten Raumrichtungen X, Y senkrecht angeordnete dritte Raumrichtung Z.

Gemäß einer Ausführungsform wurde die Klassifikationsinformation 130 durch Ausführen einer weiteren künstlichen Intelligenz 132 auf die klassifizierten zweidimensionalen Radardaten 128 generiert. Die weitere künstliche Intelligenz 132 ist hierbei darauf trainiert, basierend auf den klassifizierten zweidimensionalen Radardaten 128 die Objektposition 115 und/oder den Objekttyp 117 in Bezug auf die drei Raumdimensionen X, Y, Z zu bestimmen.

Die klassifizierten und/oder unklassifzierten Radardaten 126, 128 umfassen hierbei Daten einer Mehrzahl von entlang der zweiten Richtung Y nebeneinander verlaufender und entlang der ersten Richtung X erstreckter Scanvorgänge 140 des Messgeräts 100. Die Scanvorgänge 140 des Messgeräts 100 beschreiben hierbei Messungen des Messgeräts 100 bei einer gleichzeitigen Bewegung des Messgeräts 100 entlang der ersten Richtung X, wobei während der Messung entsprechende Radardaten 103 aufgenommen werden. Die Radardaten 103 umfassen hierbei eine Information bezüglich einer Signalstärke entlang der in die Wand 105 gerichteten dritten Raumrichtung.

Das Klassifizierten 303 umfasst hierbei in einem weiteren Verfahrensschritt 307 das Bestimmen der Objektposition 115 entlang der ersten Richtung X basierend auf der Information bezüglich der Signalstärke entlang der dritten Richtung Z, wobei die Objektposition 115 als eine Position entlang der ersten Richtung X mit maximaler Signalstärke entlang der dritten Richtung Z definiert ist.

In einem weiteren Verfahrensschritt 305 werden die durch das Klassifikatormodul 183 klassifizierten Sensordaten 174 zu den Trainingsdatensatz 143 zusammengeführt.

Fig. 8 zeigt eine grafische Darstellung eines zweidimensionalen Flächenplots 142 von Radardaten 103.

Fig. 8 zeigt einen Flächenplot 142 von zweidimensionalen Radardaten 103. Der Flächenplot 142 zeigt Radardaten in Bezug auf die erste Raumrichtung X, die parallel zur Oberfläche der zu untersuchenden Wand 105 verläuft und entlang der dritten Raumrichtung Z die in die Wand zeigend verläuft. Der Flächenplot 142 zeigt ferner ein Messsignal 146. Das Messsignal 146 ist entlang der ersten Raumrichtung X angeordnet. Eine Signalstärke des Messsignals 146 ist entlang der dritten Raumrichtung Z aufgetragen. Ferner zeigt der Flächenplot 142 eine Hüllkurve der Signalstärke 144.

Gemäß einer Ausführungsform kann die Objektposition 115 eines in der durch die Radardaten des Flächenplots 142 abgebildeten Wand 105 angeordneten Objekts 113 entlang der ersten Raumrichtung X basierend auf der Signalstärke des Messsignals 146 in der dritten Raumrichtung Z ermittelt werden. Die Objektposition 115 des durch das Messsignal 146 dargestellten Objekts 113 entlang der ersten Raumrichtung X kann somit als die Position entlang der ersten Raumrichtung X identifiziert werden, in der die Signalstärke des Messsignals 146 in Bezug auf die dritte Raumrichtung Z einen maximalen Wert annimmt. Der maximale Wert ist durch den Peak der Hüllkurve 144 dargestellt. Die jeweilige Objektposition 115 in Bezug auf die erste Richtung X ist hierbei durch das X-Symbol innerhalb des Flächenplots 142 dargestellt.

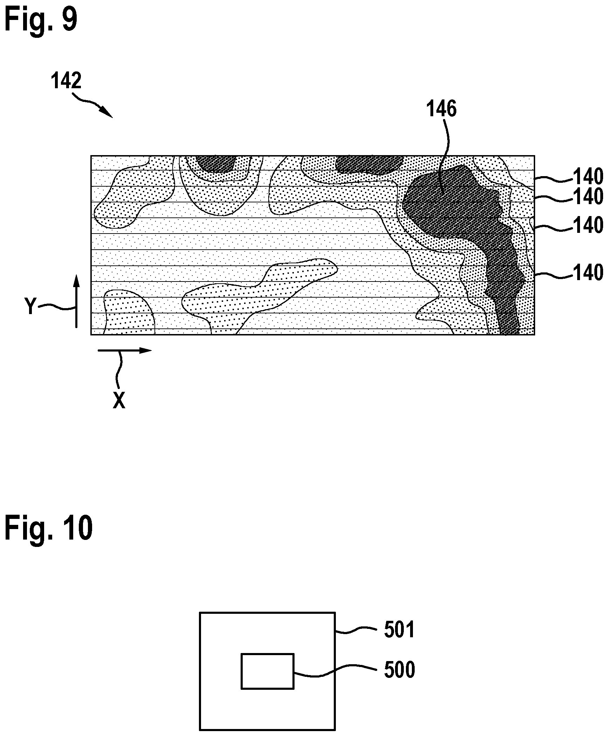

Fig. 9 zeigt eine grafische Darstellung eines zweidimensionalen Flächenplots 142 von Radardaten 103.

Fig. 9 zeigt einen weiteren Flächenplot 142. Der Flächenplot 142 zeigt Radardaten, die entlang der ersten Raumrichtung X und der zweiten Raumrichtung Y erstreckt sind. Der Flächenplot 142 zeigt wiederum ein Messsignal 146.

Der Flächenplot 142 ist durch eine Mehrzahl entlang der zweiten Raumrichtung Y nebeneinander angeordneter Scanvorgänge 140 ausgebildet. Die Scanvorgänge 140 erstrecken sich entlang der ersten Raumrichtung X. Zum Erstellen des Flächenplots 142 werden somit Radardaten während der Ausführung von mehreren Scanvorgängen 140 aufgenommen, indem das Messgerät 100 entlang der ersten Richtung X bewegt wird und währenddessen Radardaten 103 aufgenommen werden. Zum Erzeugen mehrerer Scanvorgänge 140 wird das Messgerät 100 an verschiedenen Positionen entlang der zweiten Raumrichtung Y angeordnet. Ausgehend von diesen Positionen wird das Messgerät 100 entlang der ersten Raumrichtung X zum Aufnehmen der Daten der Scanvorgänge 140 bewegt.

Fig. 10 zeigt eine schematische Darstellung eines Computerprogrammprodukts 500, umfassend Befehle, die bei der Ausführung des Programms durch eine Datenverarbeitungseinheit diese veranlassen, das Verfahren 300 zum Erzeugen eines Trainingsdatensatzes 143 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Computerimplementiertes Verfahren (300) zum Erzeugen eines Trainingsdatensatzes (143) für ein Training einer künstlichen Intelligenz (125) zum Betreiben eines Messgeräts (100), insbesondere eines Wanddiagnosegeräts, umfassend:
Empfangen (301) von unklassifizierten Sensordaten (172) wenigstens einer Sensoreinheit (101) eines Messgeräts (100) durch ein Klassifikatormodul (183), wobei die Sensordaten (172) eine zu diagnostizierende Wand (105) mit einem in der Wand (105) in einer Objektposition (115) angeordneten Objekt (113) eines Objekttyps (117) abbilden;
Klassifizieren (303) der unklassifizierten Sensordaten (172) und
Bereitstellen von klassifizierten Sensordaten (174) durch Ausführen eines Klassifikatormoduls (183) auf die unklassifizierten Sensordaten (172),
wobei das Klassifikatormodul (183) als eine künstliche Intelligenz ausgebildet und eingerichtet ist, basierend auf unklassifizierten Sensordaten (172) eine Objekterkennung auszuführen und die Objektposition (115) und/oder den Objekttyp (117) des Objekts (113) zu bestimmen und die unklassifizierten Sensordaten (172) in Bezug auf die Objektposition (115) und/oder den Objekttyp (117) zu klassifizieren; und
Hinzufügen (305) der klassifizierten Sensordaten (174) zu einem Trainingsdatensatz (143).

2. Verfahren (300) nach Anspruch 1, wobei die unklassifizierten Sensordaten (172) zweidimensionale unklassifizierte Radardaten (126) umfassen, wobei das Klassifikatormodul (183) basierend auf den unklassifizierten Radardaten (126) und unter Berücksichtigung einer Klassifikationszusatzinformation (130) trainiert wurde, in Bezug auf die Objektposition (115) und/oder den Objekttyp (117) klassifizierte Radardaten (128) zu generieren, wobei die klassifizierten Sensordaten (174) die klassifizierten Radardaten (128) umfassen und eine Wand (105) mit einem in der Wand (105) ausgebildeten Objekt (113) in Bezug auf zwei Raumdimensionen abbilden, und wobei die
Klassifikationszusatzinformation (130) eine Information bezüglich der Objektposition (115) und/oder des Objekttyps (117) in Bezug auf eine dritte Raumdimension umfasst.

3. Verfahren (300) nach Anspruch 1 oder 2, wobei die Klassifikationszusatzinformation (130) durch Ausführen einer weiteren künstlichen Intelligenz (132) auf die klassifizierten zweidimensionalen Radardaten (128) generiert wurde, und wobei die weitere künstliche Intelligenz (132) trainiert ist, basierend auf den klassifizierten zweidimensionalen Radardaten (128) die Objektposition (115) und/oder den Objekttyp (117) in Bezug auf die drei Raumdimensionen zu bestimmen.

4. Verfahren (300) nach Anspruch 3, wobei die zwei Raumdimensionen der klassifizierten und/oder unklassifizierten zweidimensionalen Radardaten (126, 128) durch senkrecht zueinander und parallel zu einer Oberfläche der durch die Radardaten (126, 128) abgebildeten Wand (105) orientierte erste und zweite Richtungen (X, Y) definiert sind, wobei die dritte Raumdimension durch eine senkrecht zu den ersten und zweiten Richtungen (X, Y) und in die Wand (105) gerichtete dritte Richtung (Z) gegeben ist, wobei die klassifizierten und/oder unklassifizierten Radardaten (126, 128) Daten einer Mehrzahl von entlang der zweiten Richtung (Y) nebeneinander verlaufender und entlang der ersten Richtung (X) verlaufender Scanvorgänge (140) des Messgeräts (100) beschreiben, wobei in den Scanvorgängen (140) das Messgerät (100) entlang der ersten Richtung (X) relativ zur Wand (105) bewegt wird und Radardaten (103) aufgenommen werden, und wobei die Radardaten (103) eine Information bezüglich einer Signalstärke entlang der in die Wand (105) gerichteten dritten Richtung (Z) umfassen.

5. Verfahren (300) nach einem der voranstehenden Ansprüche, wobei das Klassifizieren (303) umfasst,
Bestimmen (307) der Objektposition (115) entlang der ersten Richtung (X) basierend auf der Information bezüglich der Signalstärke entlang der dritten Richtung (Z), wobei die Objektposition (115) als eine Position entlang der ersten Richtung (X) mit maximaler Signalstärke entlang der dritten Richtung (Z) definiert ist.

6. Verfahren (300) nach einem der voranstehenden Ansprüche 2 bis 5, wobei die Klassifikationszusatzinformation (130) die Information bezüglich der Signalstärke entlang der dritten Richtung (Z) umfasst.

7. Verfahren (300) nach einem der voranstehenden Ansprüche, wobei die klassifizierten und/oder unklassifizierten Radardaten (126, 128) als zweidimensionale Flächenplots (142) dargestellt sind, in denen die Daten der Mehrzahl von Scanvorgängen (140) zusammengefasst sind, und wobei die Bestimmung der Objektposition (115) für die Mehrzahl von Scanvorgängen (140) gemeinsam ausgeführt wird.

8. Verfahren (300) nach einem der voranstehenden Ansprüche, wobei die Klassifikation der unklassifizierten Sensordaten (172) ferner in Bezug auf eine Objekttiefe (119) und/oder eine Objektausdehnung (121) des Objekts (113) erfolgt.

9. Verfahren (300) nach einem der voranstehenden Ansprüche, wobei Objektklassen des Objekttyps (117) des Objekts (113) umfassen: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps (123) der Wand (105) umfassen: Betonwand, Leichtbau-/Trockenbauwand, gemauerte Wand und/oder von vermauerten Steinen der Wand, Fußbodenheizung, Wandheizung.

10. Trainingsdatensatz (143) für ein Training einer künstlichen Intelligenz (125) eines Messgeräts (100) zur Wanddiagnostik, wobei der Trainingsdatensatz (143) nach dem Verfahren (300) zum Erzeugen eines Trainingsdatensatzes (143) nach einem der voranstehenden Ansprüche 1 bis 9 erzeugt wurde.

11. Recheneinheit (151), die eingerichtet ist, das Verfahren (300) zum Erzeugen eines Trainingsdatensatzes (143) für ein Training einer künstlichen Intelligenz (125) zum Betreiben eines Messgeräts (100) nach einem der voranstehenden Ansprüche 1 bis 9 auszuführen.

12. Computerprogrammprodukt (500) umfassend Befehle, die bei der Ausführung des Programms durch eine Datenverarbeitungseinheit diese veranlassen, das Verfahren (300) zum Erzeugen eines Trainingsdatensatzes (143) für ein Training einer künstlichen Intelligenz (125) zum Betreiben eines Messgeräts (100) nach einem der voranstehenden Ansprüche 1 bis 9 auszuführen.
